(19)

**Europäisches Patentamt**
**European Patent Office**
**Office européen des brevets**

(11) **EP 1 057 512 B1**

(12) **EUROPÄISCHE PATENTSCHRIFT**

(45) Veröffentlichungstag und Bekanntmachung des Hinweises auf die Patenterteilung:
**04.04.2007 Patentblatt 2007/14**

(21) Anmeldenummer: **00101522.1**

(22) Anmeldetag: **26.01.2000**

(51) Int Cl.:
*B01D 29/05* (2006.01)　　*B01D 29/39* (2006.01)
*B01D 29/54* (2006.01)　　*B01D 29/60* (2006.01)
*B01D 29/62* (2006.01)　　*B01D 29/66* (2006.01)
*B01D 29/86* (2006.01)　　*B01D 29/94* (2006.01)
*B01D 35/12* (2006.01)　　*B01D 35/18* (2006.01)
*B01D 35/22* (2006.01)

(54) **Verfahren und Vorrichtung zur Fest-Flüssig-Trennung**

Method and apparatus for solid/liquid separation

Méthode et dispositif de séparation solide-liquide

(84) Benannte Vertragsstaaten:
**AT BE CH CY DE DK ES FI FR GB GR IE IT LI LU MC NL PT SE**

(30) Priorität: **02.06.1999 DE 19925397**

(43) Veröffentlichungstag der Anmeldung:
**06.12.2000 Patentblatt 2000/49**

(73) Patentinhaber: **BOKELA Ingenieurgesellschaft für mechanische Verfahrenstechnik mbH**
**76131 Karlsruhe (DE)**

(72) Erfinder:
• **Bott, Reinhard, Dr.**
**76337 Waldbronn (DE)**

• **Langeloh, Thomas, Dr.**
**69240 Mühlhausen (DE)**
• **Ehrfeld, Egon**
**76227 Karlsruhe (DE)**

(74) Vertreter: **Wunderlich, Rainer et al**
**Patentanwälte**
**Weber & Heim**
**Irmgardstrasse 3**
**81479 München (DE)**

(56) Entgegenhaltungen:
**US-A- 3 884 805**　　**US-A- 4 066 546**
**US-A- 4 312 756**　　**US-A- 5 679 249**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft ein Verfahren zur Trennung einer Suspension in ein Retentat und ein Permeat, bei dem die Suspension in einen Suspensionsraum eingeleitet wird, in welchem mindestens ein permeables Trennelement mit einer Trennfläche vorgesehen ist, zumindest ein Rührglied in dem Suspensionsraum in einem geringen Abstand über die Trennfläche relativ zu dieser bewegt wird, so daß in einem Spalt zwischen dem Rührglied und der Trennfläche eine Strömung quer zur Trennfläche erzeugt wird, ein Differenzdruck zwischen dem Suspensionsraum und einem Permeatraum eingestellt wird, der sich an einer vom Suspensionsraum abgewandten Seite des Trennelements befindet, und das Permeat, welches aufgrund des anliegenden Differenzdrucks das Trennelement durchdringt, über eine Permeatleitung abgeleitet wird, während das eingedickte Retentat aus dem Suspensionsraum über einen Ablauf abgeleitet wird.

Die Erfindung betrifft weiter eine Vorrichtung zum Trennen einer Suspension in ein eingedicktes Retentat und ein Permeat, mit einem Suspensionsraum, welcher einen Zulauf und einen Ablauf aufweist, mindestens einem permeablen Trennelement mit einer Trennfläche, welche an den Suspensionsraum angrenzt, mindestens einem Rührglied, welches in dem Suspensionsraum angeordnet und in einem geringen Abstand über die Trennfläche bewegbar gelagert ist, einem Antrieb zum Bewegen des Rührgliedes relativ über die Trennfläche, so daß in einem Spalt zwischen dem Rührglied und der Trennfläche eine Strömung quer zur Trennfläche erzeugbar ist, einem Permeatraum, welcher durch das Trennelement von dem Suspensionsraum abgegrenzt ist, und einer Einrichtung zur Erzeugung eines Differenzdrucks zwischen dem Suspensionsraum und dem Permeatraum.

Derartige Verfahren und Vorrichtungen sind als sogenannte Scherspaltfiltration bzw. Scherspaltfilter bekannt und gehen beispielsweise aus der DE 34 01 607 A, der CH-PS 433 195, der EP 0 008 395 A oder der US 4,066,546 hervor.

Die US 4,066,546 beschreibt ein kontinuierliches Filtrationsverfahren mit einem dynamischen Filter, bestehend aus einem Filtrationstank, in dem mehrere Filterscheibenelemente angeordnet sind. Der Filtrationstank wird von dem zu filtrierenden Fluid durchströmt, während eine starke Flüssigturbulenz erzeugt wird. Diese Turbulenz wird durch sich drehende Rotoren generiert, welche in dem Filtrationstank zwischen den einzelnen Filterscheibenelementen angeordnet sind.

Die dynamische Scherspaltfiltration, welche unter den Oberbegriff der Querstromfiltration einzuordnen ist, hebt sich von anderen Verfahren der Querstromfiltration durch die Besonderheit ab, daß die Querströmung nicht durch eine mittels einer Pumpe induzierten Flüssigkeitsströmung, sondern durch ein angetriebenes Rührwerk oder durch eine schnell bewegte Filterfläche erzeugt wird. Diese dynamischen Scherspaltfilter oder einfach nur Scherspaltfilter genannten Vorrichtungen weisen zylindrische oder scheibenförmige Filterelemente auf, die entweder selbst rotieren oder über denen in nahem Abstand ein Rührer kreist. Trotz der erzeugten Querströmung, welche einer Ablagerung von Partikeln an dem Filtermedium entgegenwirkt, werden insbesondere kleinere Partikeln zu einer Grundschicht an dem Filtermedium abgelagert oder anfiltriert. Es wurde versucht, unter Einsatz von Ultraschall und elektrisch angelegten Feldern dem Ausbilden der Grundschicht entgegenzuwirken. Weiterhin wurde versucht, durch Zusatz von Konditionierungsmitteln, etwa Flockungsmitteln oder Dispergatoren, sowie durch gezielten Zusatz von Grobkorn eine Auflokkerung der Grundschicht zu bewirken, so daß diese leichter entfernbar ist. Trotz dieser relativ aufwendigen Maßnahmen ist es bei bekannten Scherspaltfiltern notwendig, den Betrieb der Filter in relativ kurzen Abständen zu unterbrechen und die Filtermedien mittels Dampfsterilisieren, Wasserspülen, Spülen mit Membran-Reinigungslösungen oder anderen Flüssigkeiten intensiv zu reinigen.

Der Erfindung liegt die **Aufgabe** zugrunde, ein Verfahren und eine Vorrichtung anzugeben, mit denen bei einem relativ geringen Aufwand ein Anfiltrieren einer Grundschicht weitestgehend vermieden wird.

Hinsichtlich des Verfahrens wird die Aufgabe dadurch gelöst, daß in bestimmten Zeitabständen der Differenzdruck für eine definierte Zeitspanne aufgehoben wird und daß in der Zeitspanne, während der der Differenzdruck aufgehoben ist, das Rührglied weiter über die Trennfläche bewegt wird. Durch das kurzfristige Aufheben des Differenzdrucks wird bei anfiltrierten Partikeln eine Normalkraft in Richtung auf die Filterfläche weitgehend beseitigt, so daß diese Partikeln auch bei einer relativ langsamen Rührbewegung durch die Querströmung von der Trennfläche fortgespült werden können. Eine Unterbrechung der Rührgliedbewegung oder ein Abschalten des Filters insgesamt ist hierbei nicht notwendig. Durch das regelmäßige, frühzeitige Beseitigen einer Grundschicht auf der Trennfläche wird auch ein Durchströmungswiderstand des Trennelementes im wesentlichen konstant auf einem niedrigen Wert gehalten, so daß eine hohe Durchströmleistung bei einem geringen Energieverbrauch erzielbar ist.

Aus steuerungstechnischer Sicht ist es bevorzugt, daß ein Aufheben des Differenzdrucks durch eine Steuerung, insbesondere Unterbrechung einer Zuführung an Suspension, einer Abführung an Retentat und/oder einer Abführung des Permeats bewirkt wird. Dabei kann durch einfaches Öffnen oder Schließen eines Ventiles an entsprechenden Flüssigkeitsleistungen ein gewünschtes Differenzdruckniveau eingestellt werden.

Für eine möglichst gute Verwertung der zu behandelnden Suspension ist es erfindungsgemäß vorgesehen, daß die Suspension vom Zulauf zum Ablauf durch mehrere kammerartige Module geleitet wird, in welchen jeweils mindestens ein Trennelement mit einer Permeatleitung angeordnet ist, und daß in Richtung vom Ablauf zum Zulauf in den einzelnen Modulen eine Aufkonzentrierung der Suspension erfolgen kann.

Bei dem erfindungsgemäßen Verfahrens wird die Ableitung des Permeats an jedem Modul mittels eines Ventiles an der Permeatleitung separat gesteuert. Hierbei ist es möglich, den Differenzdruck an jedem einzelnen Trennelement individuell einzustellen. So kann der Differenzdruck an bestimmten Trennelementen auf null gesetzt sein, während an anderen Trennelementen der Differenzdruck anliegt und diese von Permeat durchströmt werden. Dies ist insbesondere dann vorteilhaft, wenn eine gleichmäßige Zuführung von Suspension oder eine gleichmäßige Abführung von Retentat oder Permeat gewünscht ist. Das erfindungsgemäße Verfahren kann so in einen kontinuierlichen Fertigungsprozeß eingegliedert werden.

Grundsätzlich ist das Verfahren zur Filtration geeignet. Ziel einer Filtration ist es, üblicherweise eine Suspension in einen feststoffreichen Anteil und in ein Filtrat möglichst ohne jeden Feststoffanteil aufzuteilen. Um dabei einen Feststoffdurchschlag durch das üblicherweise eher offenporige Filtermedium möglichst zu vermeiden, ist ein gewisses schnelles Zusetzen der Öffnungen oder Poren des Filtermediums durch Partikeln erwünscht. Dies wird als Brückenbildungseffekt bezeichnet.

Bei der Scherspaltfiltration ist der Brückenbildungseffekt nicht erforderlich, da die Abscheidung auch von feinen Partikeln durch entsprechend kleine Öffnungen im Filtermedium bewirkt wird. Die Querströmung sorgt dafür, daß die Brücken- bzw. Schichtbildung vermieden wird und die Partikel von den Porenöffnungen wegtransportiert werden.

In einem scharfen Gegensatz zur klassischen Filtration mit Schicht- bzw. Kuchenbildung steht das Sieben, Siebfiltrieren oder Klassieren, wobei eine definierte Trennung von Partikeln bis zu einer bestimmten Größe erreicht werden soll. Hierfür wird ein Siebmedium vorgesehen, deren Sieböffnungen entsprechend der geforderten Trenngröße im wesentlichen gleich groß ausgebildet sind. Unabdingbare Voraussetzung hierfür ist jedoch, daß eine Brückenbildung über den Öffnungen verhindert wird und die zurückgehaltenen Partikel stets von den Öffnungen des Siebmediums wegtransportiert werden. Auch einzelne auf oder in den Sieböffnungen sitzende und durch eine Druckdifferenz oder eine Gewichtskraft fixierte Partikel sind zuverlässig weiterzutransportieren.

Es ist erfindungsgemäß, daß eine Siebfiltration durchgeführt wird, bei der das Trennelement als ein Siebmedium ausgebildet ist, und daß das Permeat mit einem definierten Feingutanteil gewonnen wird. Da durch das erfindungsgemäße Verfahren einem Zusetzen des Siebmediums zuverlässig entgegengewirkt wird, kann eine Siebfiltration mit einer zuverlässigen Größentrennung auch während einer längeren, ununterbrochenen Betriebsdauer durchgeführt werden. Eine derartige wirtschaftliche Siebfiltration war mit der herkömmlichen Scherspaltfiltern praktisch nicht möglich.

Ein besonders zuverlässiges Freihalten des Trennelementes von einer Grundschicht wird nach einer Weiterbildung der Erfindung dadurch erreicht, daß in der Zeitspanne, während der der Differenzdruck aufgehoben ist, die Bewegungsgeschwindigkeit des Rührgliedes geändert wird.

Zu diesem Zweck ist es nach der Erfindung auch bevorzugt, daß in der Zeitspanne, während der der Differenzdruck aufgehoben ist, eine Rückspülung von der Seite des Permeatraumes in den Suspensionsraum durchgeführt wird.

Es ist bekannt, daß bei der Filtration der Flüssigkeitsdurchsatz unmittelbar von der Flüssigkeitsviskosität beeinflußt wird. Es gibt folgende Beziehung:

$$V_L = \frac{A_F \times \Delta_p}{\eta_L \times R}$$

A_F = Filterfläche
$\Delta_p$ = Druckdifferenz
$\eta_L$ = Flüssigkeitsviskosität
R = Durchströmwiderstand

Eine Reduzierung der Flüssigkeitsviskosität durch eine Erhöhung der Suspensionstemperatur führt somit zu einer Erhöhung des Flüssigkeitsdurchsatzes. Demgegenüber kann es auch gewünscht sein, daß die Temperatur der Suspension während der Filtration abgesenkt zumindest konstant gehalten wird. Beispiele hierfür finden sich in der Bioverfahrenstechnik, wo durch eine unzulässige Temperaturerhöhung das biologische Gut geschädigt werden könnte, oder auch in der chemischen Industrie, wo bei der Abtrennung gelartiger, gelatinöser Partikel durch eine Temperaturabsenkung die Partikelkonsistenz im Sinne einer Verbesserung der Abscheideeigenschaften vorteilhaft verbessert werden kann.

Voraussetzung für diese Temperaturbeeinflussung des Filtrationsprozesses ist eine homogene Verteilung oder zumindest direkt am Filtermedium wirksame Temperaturbeeinflussung. Hierzu ist eine schnelle und intensive Durchmischung der Suspension vorteilhaft. Bei der Scherspaltfiltration wird durch die Bewegung des Rührgliedes die Suspension intensiv durchmischt und per Energie in der Suspension dissipiert und somit die Suspensionstemperatur erhöht. Die Temperatur wächst mit fortlaufender Betriebszeit an und kann insbesondere bei dem erfindungsgemäßen Verfahren zu unzulässigen Betriebszuständen führen.

Gemäß einer weiteren bevorzugten Ausführung der Erfindung ist deshalb vorgesehen, daß die Suspension in dem Suspensionsraum gekühlt oder auch erwärmt wird. Der Erfindung liegt dabei die Erkenntnis zugrunde, daß für einen gleichbleibenden Filtrations- oder Siebfiltrationsvorgang eine konstante Temperatur oder zumindest das Verhindern des Überschreitens einer maximalen Temperatur im Suspensionsraum von einer wesentlichen Bedeutung sein kann. Insbesondere bei hochviskosen Suspensionen beseht die Gefahr einer starken Erwärmung durch die Rührbewegung. Die erfindungsgemäße Temperaturführung kann über die gesamte axiale Länge der Vorrichtung vom Zulauf zum Ablauf hin oder ausschließlich in einem begrenzten Bereich vor dem Ablauf erfolgen.

Ein möglichst gutes Freihalten der Trennelemente von einer Grundschicht wird erfindungsgemäß dadurch erreicht, daß die Zeitspanne, während der der Differenzdruck aufgehoben ist, auf einen Wert zwischen 5 Sekunden und 120 Sekunden eingestellt wird.

Weiterhin ist es bevorzugt, daß die Zeitabstände zwischen zwei aufeinanderfolgenden Aufhebungen des Differenzdruckes zwischen 20 Sekunden und einer Stunde eingestellt werden.

Gemäß der Erfindung wird insbesondere bei einer Siebfiltration ein gutes Verfahrensergebnis dadurch erreicht, daß eine Suspension mit formveränderlichen, weichen Partikeln verwendet wird, insbesondere eine Suspension aus einem organischen Lösungsmittel, beispielsweise Polyalkohole, mit Polymerteilchen, beispielsweise aus Polystyrol. Suspensionen mit Polymerteilchen, insbesondere halogenierten oder nicht halogenierten, aliphatischen oder aromatischen Kohlenwasserstoffen, in organischen Lösemitteln, wie in einem mehrwertigen Alkohol, werden als ein Ausgangsprodukt auf vielen Gebieten verwendet, beispielsweise der Herstellung von Textilfasern oder technischen Schäumen. Um ein Verblokken beispielsweise der Spinndüsen zu vermeiden, ist eine vorausgehende Abscheidung von Polymerteilchen einer bestimmten Größe unerläßlich.

Da jedoch die Polymerteilchen in dem organischen Lösemittel zumeist stark quellen und weich werden, war bisher eine Siebfiltration aufgrund des schnellen Verblockens des Siebmediums kaum möglich, da die Sieböffnungen dauerhaft verlegt wurden und kein Weitertransport erfolgte. Gerade derartige Suspensionen können mit dem erfindungsgemäßen Verfahren in wirtschaftlicher Weise siebfiltriert werden. Hervorragende Ergebnisse wurden bei einer hochviskosen Suspension aus Polyol mit Polystyrolpartikeln mit einem Anteil von 30 Gewichtsprozent erzielt. Ein Großteil der Polystyrolpartikeln weist eine Größe von ca. $10 \mu m$ auf, welche mit Partikeln einer Größe von ca. $50 \mu m$ vermengt sind.

Ein hervorragendes Siebergebnis insbesondere zur Behandlung dieser Suspension wird erfindungsgemäß dadurch erreicht, daß bei einer Porengröße von $60 \mu m$ des Trennelements der Differenzdruck zwischen dem Suspensionsraum und dem Permeatraum auf 0,1 bis 0,8 bar eingestellt wird und daß die Temperatur in dem Suspensionsraum auf einen maximal zulässigen Wert gehalten wird.

Dabei hat es sich als vorteilhaft herausgestellt, daß zum Abführen des Retentats ein am Ablauf angeordnetes Abschlämmventil in vorgegebenen Zeitzyklen kurzfristig geöffnet wird. Eine Öffnung des Abschlämmventils kann dabei beispielsweise für eine Zeit zwischen einer Sekunde und drei Sekunden im Abstand von zwei bis fünf Minuten erfolgen.

Nach einer weiteren erfindungsgemäßen Ausführung ist es vorteilhaft, daß in den Suspensionsraum zusätzlich an einer oder an mehreren Stellen im Gleichstrom oder im Gegenstrom eine gleichartige oder fremdartige Waschflüssigkeit eingeleitet wird. Hierdurch ist es möglich, eventuell vorliegende Verunreinigungen auszuwaschen. Ein weiterer Nutzen liegt in einer zwischenstufigen Verdünnung der Suspension, was erfindungsgemäß zu einer weiteren Verbesserung der Siebfiltration führt.

Bezüglich der Vorrichtung wird die Aufgabe nach der Erfindung zum einen dadurch gelöst, daß mindestens ein steuerbares Ventil an dem Zulauf, dem Ablauf und/oder einer Leitung für das Permeat aus dem Permeatraum angeordnet ist, daß eine Steuereinrichtung zum Öffnen und Schließen des Ventils zu bestimmten Zeiten vorgesehen ist und daß das Ventil durch die Steuereinrichtung zum Aufheben des Differenzdrucks steuerbar ist.

Durch die erfindungsgemäße Vorrichtung ist eine einfache und zugleich besonders effektive Drucksteuerung möglich. Eine zum Aufbau des Differenzdrucks notwendige Druck- oder Vakuumpumpe kann dabei mit gleichbleibender Leistung gefahren werden. Die Steuerung kann entsprechend vorgegebenen Zyklen oder anhand von durch Sensoren ermittelten Werten erfolgen. Mittels der Sensoren können Betriebsparameter wie Druck, Temperatur, Durchflußmengen, Feststoffoder Flüssigkeitsgehalt des Permeats oder Retentats ermittelt werden. Bei Über- oder Unterschreiten vorgegebener Grenzwerte kann eine gewünschte Steuerung des Ventiles erfolgen.

Hinsichtlich der Vorrichtung wird die Aufgabe erfindungsgemäß zum anderen dadurch gelöst, daß eine der Trennfläche zugewandte Oberfläche des Rührgliedes mit einem kurvenförmigen Strömungsprofil ausgebildet ist und daß in der Suspension, welche bei Bewegung des Rührgliedes durch den Spalt strömt, im Verlauf des Spaltes aufgrund des kurvenförmigen Strömungsprofiles eine Geschwindigkeitserhöhung und/oder eine Verringerung des Differenzdrucks erzeugbar ist.

Durch die erfindungsgemäße Gestaltung des Rührgliedes wird der Effekt der Querströmung bezüglich des Fortspülens angelagerter Feststoffpartikeln drastisch verstärkt.

Bei der erfindungsgemäßen Vorrichtung ist ein Aufbau aus mehreren Modulen vorgesehen, wobei jedes Modul ein etwa scheibenförmiges Trennelement aufweist und zwischen zwei angrenzenden Modulen jeweils ein Rührglied angeordnet ist.

Für eine gezielte, für jedes Modul individuelle Drucksteuerung ist die vorgenannte Ausführungsform dadurch erfindungsgemäß weitergebildet, daß an jedem Modul eine Permeatleitung mit einem steuerbaren Ventil vorgesehen ist.

Gemäß einem weiteren Aspekt der Erfindung kann eine Siebfiltration dadurch erreicht werden, daß das permeable Trennelement als ein Siebelement mit Sieböffnungen ausgebildet ist, welche im wesentlichen die gleiche Größeaufweisen.

Die Erfindung ist in vorteilhafter Weise dadurch weitergebildet, daß der Antrieb eine Antriebswelle aufweist, welche von der Seite des Zulaufs in den Suspensionsraum hineinragt und mittig zu dem scheibenförmigen Trennelement in den Modulen angeordnet ist, und daß die Rührglieder an der Antriebswelle angebracht sind. Hierdurch wird bei einem kompakten Aufbau ein einfacher und zuverlässiger Antrieb der Rührglieder erreicht. Die Antriebswelle kann gliedweise zusammengebaut sein oder aus einem durchgehenden Schaft bestehen.

Eine andere bevorzugte Ausführungsform der Erfindung besteht darin, daß das Rührglied als ein Rotor mit im wesentlichen radial verlaufenden Rührblättern ausgebildet ist und daß die Rührblätter sich radial nach außen verjüngen, so daß ein Abstand zwischen dem jeweiligen Rührblatt und der Trennfläche sich radial nach außen hin erweitert. Hierdurch kann über die gesamte radiale Länge eines Rührblattes ein konstanter Schergradient eingestellt werden, welcher der Quotient aus der Umfangsgeschwindigkeit und der Spaltbreite ist. Da die Umfangsgeschwindigkeit radial nach außen hin zunimmt, muß die Spaltbreite für einen konstanten Schergradienten entsprechend radial nach außen hin vergrössert ausgebildet sein.

Eine noch bessere Reinigungswirkung wird nach einer Weiterbildung der Erfindung dadurch erzielt, daß die Rührblätter eines als Rotor ausgebildeten Rührgliedes in einer Rotorebene angeordnet sind, daß die Rotoren axial versetzt zueinander und in einem schrägen Winkel zur Achse an der Antriebswelle angebracht sind und daß zwischen den einzelnen Rotoren jeweils ein Trennelement mit zwei gegenüberliegenden, im wesentlichen radial verlaufenden Trennflächen vorgesehen sind. Durch diese spezielle Anordnung wird auf einer Seite eines Trennelementes durch einen schräg angeordneten Rotor ein Druck oder ein Sog erzeugt, während auf der gegenüberliegenden Seite des Trennelementes durch den angrenzenden Rotor ein Sog bzw. ein Druck erzeugt wird. Durch diese gegenteilige Wirkung der beiden angrenzenden Rotoren auf das Trennelement wird eine verstärkte Reinigung durch die oszillierende Bewegung mittels der schräg gestellten Rotoren erreicht.

Eine besonders geringe Antriebsenergie und damit verbunden eine entsprechend geringe Erwärmung der Suspension im Suspensionsraum wird erfindungsgemäß dadurch erreicht, daß die Rührblätter eines als Rotor ausgebildeten Rührgliedes jeweils aus mehreren relativ schmalen Stegen aufgebaut sind. Die Stege verlaufen dabei entlang den Trennflächen der angrenzenden Trennelemente, so daß eine gewünschte Scherspaltströmung erzeugt wird. Aufgrund eines Freiraumes zwischen den einzelnen Stegen eines Rührblattes wird eine übermäßige Verwirbelung der weiteren, sich zwischen zwei angrenzenden Trennelementen befindlichen Suspension vermieden.

Eine andere bevorzugte Ausführungsform besteht darin, daß die Rührblätter eines als Rotor ausgebildeten Rührgliedes jeweils im wesentlichen als eine rechteckige Platte ausgebildet ist, welche in einem rechten Winkel zu einer angrenzenden Trennfläche angeordnet ist. Die rechteckige Platte ist in einer radialen und axialen Richtung entsprechend der Form des Suspensionsraumes zwischen zwei gegenüberliegenden Trennelementen ausgebildet.

Zur Verbesserung der Reinigungswirkung besteht eine bevorzugte Ausführungsform der Erfindung darin, daß innerhalb des Permeatraumes eine Rückspüleinrichtung vorgesehen ist, durch welche eine Spülflüssigkeit vom Permeatraum durch das Trennelement in den Suspensionsraum leitbar ist.

Für eine gewünschte Temperatureinstellung ist es vorteilhaft, daß innerhalb des Suspensionsraumes mindestens eine Kühleinrichtung zur Temperaturführung der Suspension angeordnet ist. Dabei können innerhalb des Suspensionsraumes oder der Zu- und Ableitungen Temperaturfühler angeordnet sein, mittels der eine Steuereinrichtung die Temperatur in der Suspension eingestellt wird. Als Kühleinrichtung können insbesondere Kühlplatten vorgesehen sein, durch welche ein Kühlmedium, etwa Wasser, leitbar ist.

Eine zusätzliche Behandlung der Suspension oder des eingedickten Retentats wird erfindungsgemäß dadurch bewirkt, daß eine Wascheinrichtung mit mindestens einer Waschflüssigkeit vorgesehen ist, welche in den Suspensionsraum mündet. Die Erfindung wird nachfolgend anhand von bevorzugten Ausführungsbeispielen weiter erläutert, welche in den Zeichnungen schematisch dargestellt sind. In den Zeichnungen zeigen:

Fig. 1      eine Querschnittsansicht durch eine erfindungsgemäße Vorrichtung;

Fig. 2      ein Schaubild zu einer Pilotanlage zur Durchführung des erfindungsgemäßen Verfahrens;

Fig. 3      eine schematische Detaildarstellung eines Rührblattes nach einer ersten Ausführungsform;

Fig. 4      eine schematische Darstellung eines Rührblattes gemäß einer zweiten Ausführungsform;

Fig. 5 bis 12      schematisierte Querschnittsansichten durch alternative Ausführungsformen eines Rührblattes;

Fig. 13          eine schematisierte Querschnittsansicht einer weiteren erfindungsgemäßen Vorrichtung mit schräg gestellten Rotoren;

Fig. 14          eine schematische Querschnittsansicht durch eine weitere erfindungsgemäße Ausführungsform mit einer Gegenstromwaschung;

Fig. 15          eine schematische Teilquerschnittsansicht einer erfindungsgemäßen Ausführungsform mit einer speziellen Permeatableitung; und

Fig. 16          eine schematische Teilquerschnittsansicht einer weiteren erfindungsgemäßen Ausführungsform mit einer Kühleinrichtung.

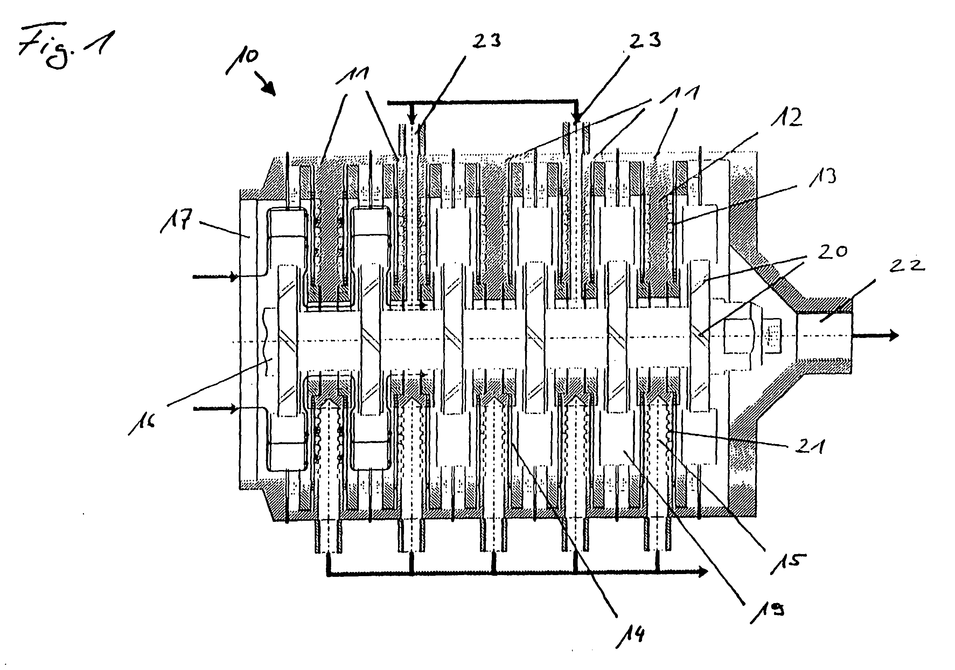

Bei der in Figur 1 dargestellten erfindungsgemäßen Vorrichtung 10 handelt es sich um ein Scherspaltfilter, das mit fünf im wesentlichen gleich aufgebauten Filtermodulen 11 ausgestattet ist. Jedes einzelne Modul 11 weist scheibenförmige Trennelemente 12 mit jeweils zwei gegenüberliegenden Trennflächen 13 auf. Durch die modulartige Aneinanderreihung der Trennelemente 12 wird ein Suspensionsraum 14 gebildet. Durch die Trennflächen 13, welche durch ein flexibles oder vorzugsweise starres Filter- oder Siebmedium gebildet sein können, wird von dem Suspensionsraum 14 ein Permeatraum 15 innerhalb von jedem Trennelement 12 gebildet.

Die einzelnen Module 11 weisen zum Durchtritt einer Antriebswelle 16 jeweils einen zentrischen Durchgang auf. Die Antriebswelle 16 wird durch einen nicht dargestellten Antrieb von der Seite eines Zulaufs 17, welcher sich in der Figur 1 auf der linken Seite befindet, in Rotation versetzt. An der Antriebswelle 16 sind in gleichmäßigen axialen Abständen Rührglieder 18 angebracht, die jeweils innerhalb einer, aus jeweils zwei Modulen 11 gebildeten Suspensionskammer angeordnet sind. Die Rührglieder 18 sind als sogenannte Rotoren mit Rührblättern 19 ausgebildet, welche zur Erzeugung einer Scherspaltströmung in einem nahen Abstand über die jeweils angrenzende Trennfläche 13 bewegbar sind. Ein radial innenliegender Bereich eines Rotors ist als eine Scheibe mit quer verlaufenden Durchgängen 20 ausgebildet.

Über den Zulauf 17 wird eine Suspension in den Suspensionsraum 15 eingeleitet. Über eine nicht dargestellte Druckerzeugungseinrichtung, welche innerhalb des Suspensionsraumes 14 einen Überdruck oder innerhalb des Permeatraumes 15 einen Unterdruck erzeugen kann, wird zwischen dem Suspensionsraum 14 und dem Permeatraum 15 ein Differenzdruck eingestellt. Aufgrund des Differenzdrucks durchdringt ein Permeat die Trennfläche 13, wobei die im Suspensionsraum 14 verbleibende Suspension eine Aufkonzentrierung erfährt.

Die Rührglieder 18 mit den Rührblättern 19 erzeugen auf den Trennflächen 13 eine Querströmung, so daß einerseits Partikeln in der Suspensionskammer vermischt und zum nächsten Modul 11 weitertransportiert werden, sowie andererseits auf der Trennfläche 13 ein Anlagern von Partikeln erschwert wird. Als Filter- oder Siebmedien kommen vorzugsweise Mikrofiltrationsmembranen (MF), aber auch Ultrafiltrationsmembranen (UF), feine Gewebe, Fließstoffe usw., sowie flexible oder starre Siebmedien aus verschiedenen Werkstoffen in Frage. Bei flexiblen Trennmedien ist es zweckmäßig, daran angrenzend, innerhalb des Permeatraumes Stützelemente 21 vorzusehen, an welchen die einzelnen Trennmedien fest angebracht sein können.

Die einzelnen Suspensionskammern in den Modulen 11 sind jeweils über einen zentralen Durchgang entlang der Antriebswelle 16 miteinander verbunden. Der Durchgang ist dabei so dimensioniert, daß die Suspension von einem Modul 11 zum nächsten fließen kann. An der dem Zulauf 17 gegenüberliegenden Seite weist die Vorrichtung 10 einen Ablauf 22 auf, welcher durch ein nicht dargestelltes Abschlämmventil verschließbar ist. Die Suspension strömt demnach vom Zulauf 17 in Richtung des Ablaufes 22. Dabei wird die Suspension von Modul 11 zu Modul 11 aufkonzentriert, wobei aus den Permeaträumen 15 der einzelnen Trennelemente 12 über Leitungen das Permeat abgeführt wird. Die aufkonzentrierte Suspension wird beim Ablauf 22 als ein eingedicktes Retentat abgeführt. Das Abschlämmventil kann dabei in festgelegten Zyklen kurzzeitig geöffnet werden, um die abgeschiedenen und aufkonzentrierten Partikeln aus dem Filter abzulassen. Alternativ hierzu kann mittels einer volumentrischen Dosierpumpe ein (quasi-) kontinuierliches Abschlämmen erfolgen.

Die erfindungsgemäße Vorrichtung 10 ist auch zum intensiven Waschen von Feststoffen geeignet. Hierzu sind an einzelnen Modulen 11 Leitungen 23 für eine Waschflüssigkeit vorgesehen. Die Waschflüssigkeit wird sofort durch die Rührglieder 18 intensiv mit der Suspension vermischt, so daß kontinuierlich Waschflüssigkeit vermischt mit Mutterlauge abfiltriert wird. Die Waschung läßt sich zur Einsparung von Waschflüssigkeit mehrstufig gestalten.

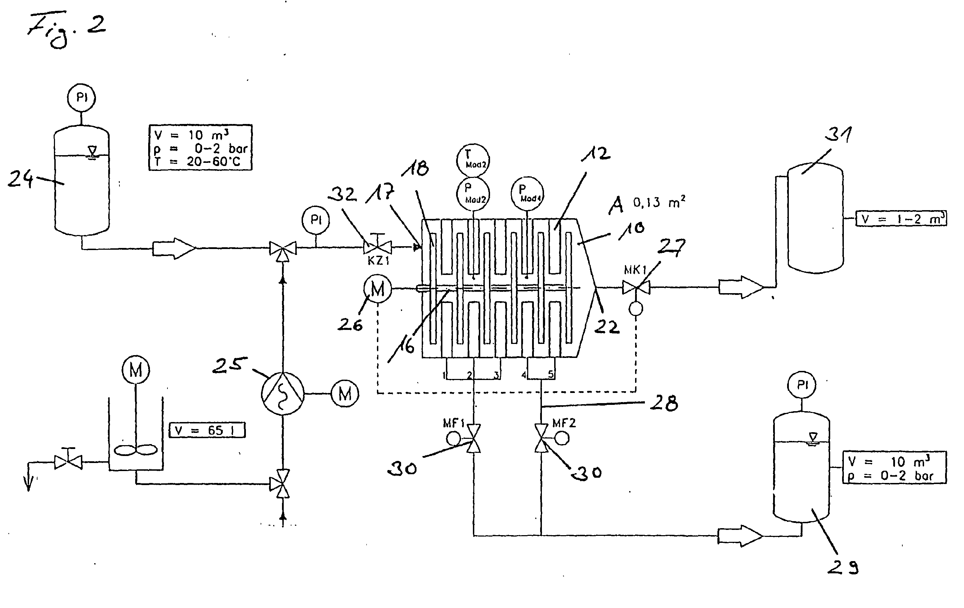

Die Betriebsweise einer erfindungsgemäßen Vorrichtung 10 in einer Pilotanlage zum Siebfiltrieren einer Suspension bestehend aus Polyol und darin enthaltenen Polystyrol-Partikeln wird im Zusammenhang mit der Figur 2 erläutert. Aus einem Suspensionstank 24 wird die zu behandelnde Suspension zu einem Zulauf 17 der Vorrichtung 10 geleitet. Die Anlage ist dabei so ausgebildet, daß vor einer Einleitung in die Vorrichtung 10 Zusatzstoffe mittels einer Pumpeinrichtung 25 der Suspension zugeführt werden können. Die Suspension wird mittels einer Antriebswelle 16 und darauf angebrachten Rührgliedern 18 von dem Zulauf 17 zu einem Ablauf 22 geleitet, wobei die Suspension an den einzelnen Trennelementen 12 der scheibenförmigen Trennelemente 12 vorbeiströmt. Die Antriebswelle wird mit einem Motor 26 in Rotation versetzt, welcher abhängig vom Betrieb eines Abschlämmventiles 27 am Ablauf 22 gesteuert wird.

Aufgrund eines bestehenden Differenzdruckes zwischen einem Suspensionsraum 14 und einem Permeatraum 15 innerhalb der einzelnen Trennelemente 12 dringt ein Permeat durch die einzelnen Trennelemente 12 in den Permeatraum 15 ein, wobei das Permeat über Permeatleitungen 28 zu einem Permeattank 29 abgeleitet wird. An den Permeatleitungen 28 sind steuerbare Ventile 30 angeordnet, durch welche der Differenzdruck an einzelnen Trennelementen 12 bzw. an Gruppen von Trennelementen 12 einstellbar ist. Insbesondere kann durch ein Schließen der Ventile 30 der Differenzdruck auf null abgesenkt werden. Während des Aufhebens des Differenzdrucks bleibt die Antriebswelle 16 weiter in Bewegung. Aufgrund des Entfallens des Differenzdrucks können an den Trennelementen 12 angelagerte Teilchen selbst bei einer relativ geringen Drehzahl der Antriebswelle 16 entfernt werden.

Über das Abschlämmventil 27 am Ablauf 22 wird die aufkonzentrierte Suspension, auch Retentat genannt, zu einem Retentattank 31 abgeführt.

Zur Steuerung der Ventile 30 über eine nicht dargestellte Steuereinrichtung sind an bestimmten Trennelementen 12 Sensoren zur Messung der Temperatur, des Drucks und/oder der Durchflußmenge vorgesehen. Anhand der ermittelten Werte kann nicht nur eine Steuerung der Ventile 30 sondern auch eine Steuerung des Motors 26 sowie der Einrichtungen zur Erzeugung des Differenzdrucks durchgeführt werden. Zur Druckeinstellung können in bekannter Weise Pumpen an dem Suspensionstank 24, dem Permeattank 29, dem Retentattank 31 oder an entsprechenden Zuleitungen vorgesehen sein.

Weitere Möglichkeiten zur Einstellung des Differenzdruckes bestehen darin, entweder das Abschlämmventil 27 oder ein steuerbares Ventil 32 am Zulauf 17 definiert zu betätigen.

Beim Betrieb der Pilotanlage mit einer Siebfläche von jeweils 0,13 m$^2$ bei einer Siebporengröße von 42 $\mu$m konnte ein kontinuierliches Sieben der oben genannten Suspension ohne ein Verblocken der Siebmedien erreicht werden. Ein besonders hervorragendes Ergebnis wurde bei einer Rührgliedgeschwindigkeit von 400 U/min, einer Temperatur zwischen 30 und 60°C im Suspensionsraum sowie einen Differenzdruck zwischen 0,2 bis 0,3 bar am Siebmedium erreicht. Bei einer Durchflußleistung von 230 bis 300 Liter pro m$^2$ und Stunde konnte eine Senkung der Konzentration der unerwünschten Grobteilchen von 100 ppm in der zungeführten Suspension auf einen hervorragenden Wert von 5 bis 10 ppm in dem Permeat erreicht werden.

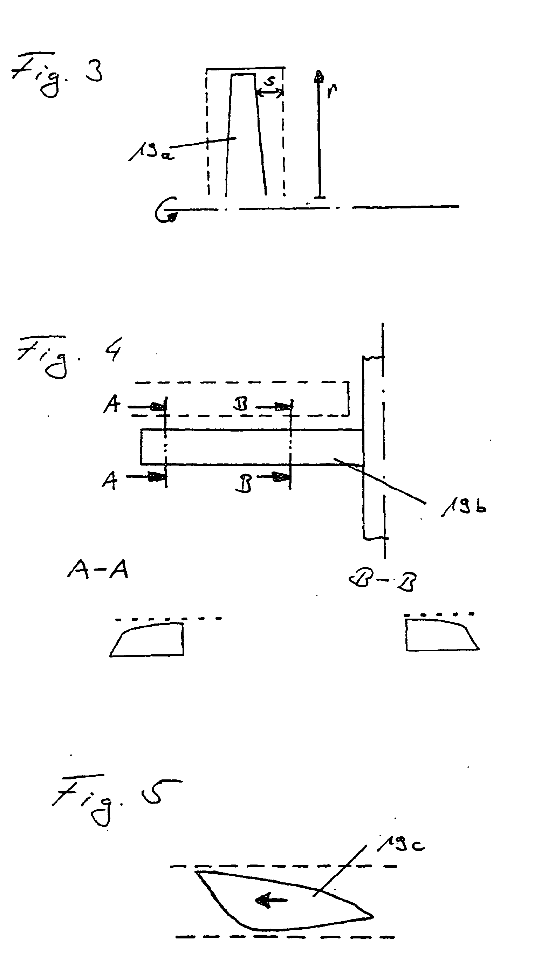

In Figur 3 ist eine bevorzugte Ausgestaltung eines Rührblattes 19a dargestellt. Bei dieser Ausführungsform verringert sich die axiale Breite des Rührblattes 19a radial nach außen hin. Hierdurch vergrößert sich ein Abstand s zu den angrenzenden Trennflächen. Da mit zunehmendem radialen Abstand zur Antriebswelle die Umfangsgeschwindigkeit des Rührblattes 19a zunimmt, kann auf diese Weise ein konstanter Schergradient erzielt werden. Hierdurch ist eine gleichmäßige und schonende Behandlung der Suspension gewährleistet.

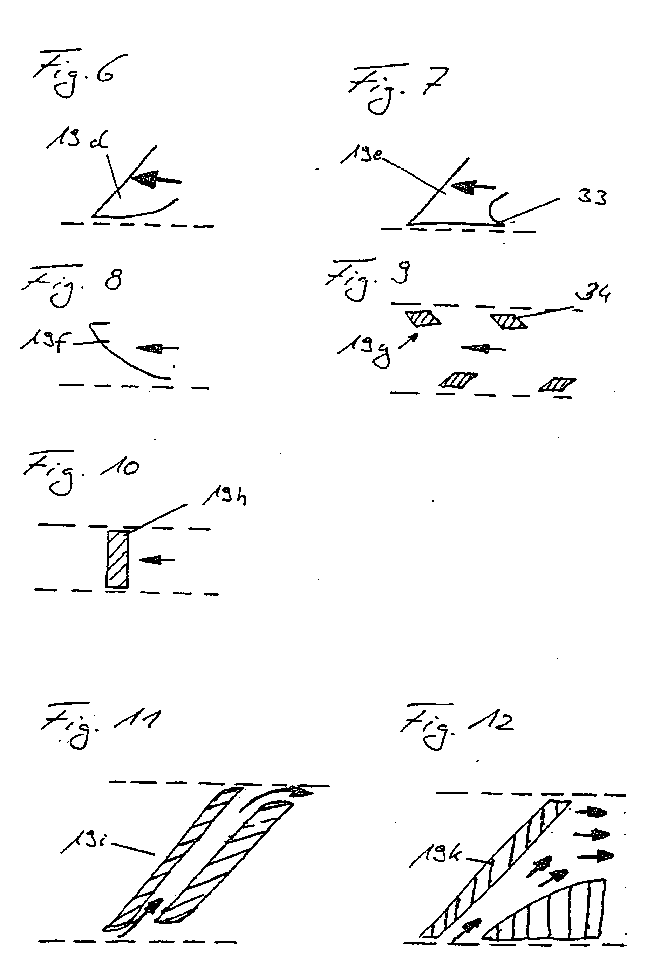

In Figur 4 ist eine weitere Ausführungsform eines Rührblattes 19b gezeigt. Entsprechend den dargestellten Schnittansichten an den Schnitten A-A und B-B ändert sich die Querschnittsform des Rührblattes 19b in einer radialen Richtung. Die Querschnittsform ist dabei so ausgebildet, daß in einem radialen Außenbereich des Rührblattes 19b eine Saugwirkung erzeugt wird, während in einem radial inneren Bereich bei der Rührbewegung ein erhöhter Druck hervorgerufen wird. Die erhöhte Druckwirkung hat den Vorteil, daß ein Filter- oder Siebmedium verstärkt in Richtung des Permeatraumes gedrückt wird, so daß auch bei einer relativ geringen Umfangsgeschwindigkeit im radial inneren Bereich ein In-Kontakt-Kommen und somit ein Verschleiß zwischen dem Rührblatt 19b und dem Filter- oder Siebmedium vermieden wird.

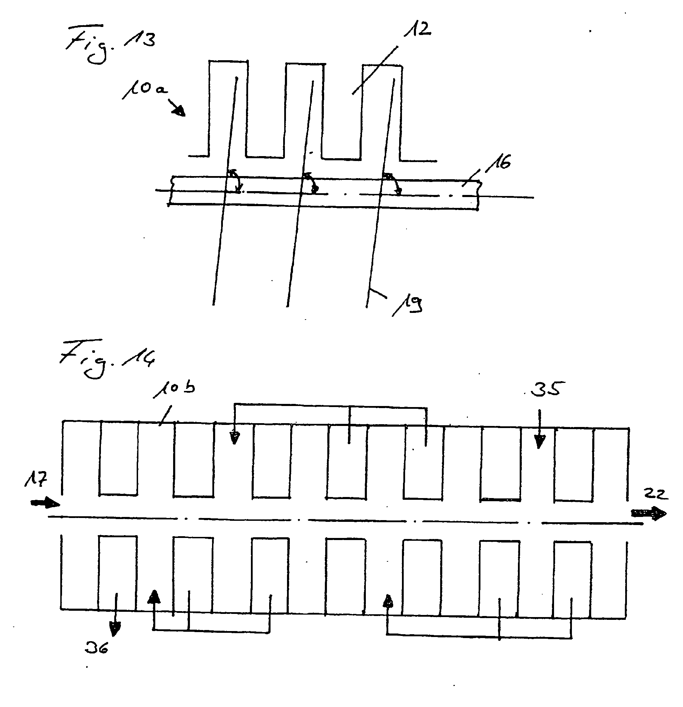

In Fig. 5 ist in einer Querschnittsansicht durch eine weitere Ausführungsform eines Rührblattes 19c ein bevorzugtes Strömungsprofil dargestellt, wobei durch einen Pfeil die Bewegungsrichtung des Rührblattes 19c angegeben ist. Bei dieser Ausgestaltung wird in einem Spalt zu dem in Figur 5 untenliegenden Trennelement aufgrund der keilförmigen Ausgestaltung eine sehr starke Spaltströmung erzeugt. Da sich in einem in Bewegungsrichtung hintenliegenden Bereich der Spalt wieder vergrößert, wird auch eine Diffusorwirkung erzielt. Hierbei entsteht eine Absenkung des Differenzdrucks, was zu einer leichteren Ablösung von Partikeln und deren anschließendes Verwirbeln oder Mischen mit der Suspension fördert. Durch die Bewegung eines Rührgliedes mit einer Vielzahl von Rührblättern 19c wird so ein schnelles Druckpulsieren mit einer starken Reinigungswirkung erreicht.

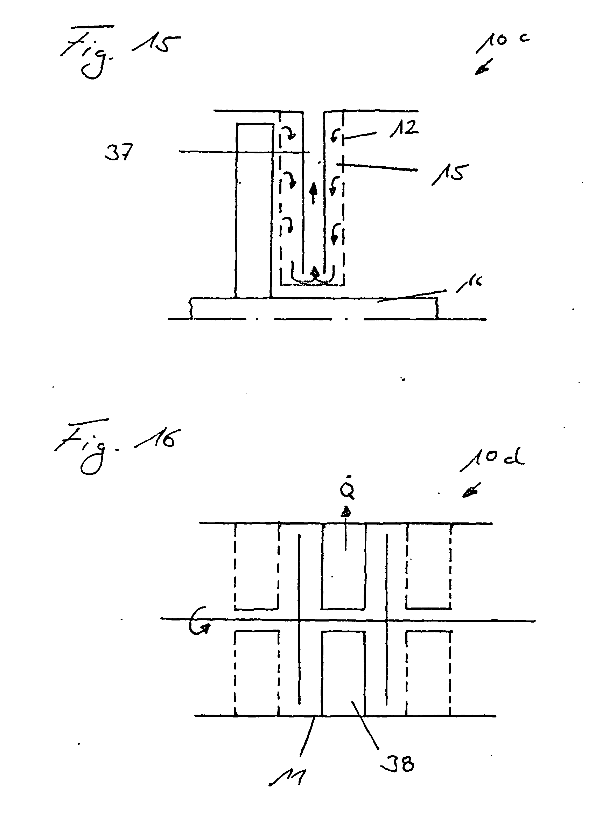

In Figur 6 ist eine Teilquerschnittsansicht eines weiteren Rührblattes 19d dargestellt, bei dem lediglich der an das Trennelement angrenzende und den Spalt bildende Bereich mit einem Strömungsprofil zur Erzeugung der Diffusorwirkung ausgebildet ist.

Bei der Teilquerschnittsansicht eines anderen Rührblattes 19e wird eine verstärkte Verwirbelung und somit ein verbessertes Ablösen von Partikeln durch Ausbilden einer definierten Abrißkante 33 in einem in Bewegungsrichtung hinteren Bereich des Rührblattes 19e erreicht.

In Figur 8 ist eine Teilquerschnittsansicht eines weiteren Rührblattes 19f dargestellt, bei dem sich die Spaltbreite entgegen der Bewegungsrichtung verringert. Bei dieser Ausgestaltung wird eine besonders hohe Querströmgeschwindigkeit an der Stelle des kleinsten Spaltes erreicht.

Ein energiesparender Aufbau aus einzelnen Stegelementen 34 eines Rührblattes 19g ist in der Querschnittsansicht von Figur 9 gezeigt. Die Stege 34 sind lediglich entlang der beiden angrenzenden Trennflächen vorgesehen, während durch einen mittleren Bereich des Rührblattes 19g die Suspension hindurchströmen kann.

Ein guter Suspensionstransport wird alternativ durch ein Rührblatt 19h mit einer plattenförmigem Ausgestaltung erreicht, welche aus der Querschnittsansicht von Fig. 10 hervorgeht.

In den Figuren 11 und 12 ist jeweils ein Doppelrührerblatt 19i und 19k dargestellt. Beide weisen einen inneren Spaltbereich auf, durch welchen eine sogenannte Saugtüte gebildet wird. Dabei wird zumindest in einem in den Figuren unteren Bereich an dem Trennelement eine starke Saugwirkung erzielt, durch welche eine Grundschicht besonders zuverlässig ablösbar ist.

In Figur 13 ist eine schematische Querschnittsansicht einer weiteren erfindungsgemäßen Vorrichtung 10a dargestellt. Bei dieser Ausführungsform sind die Rührglieder 19 als etwa scheibenförmige Rotoren ausgebildet, deren Rotorebenen in einem spitzen Winkel zu einer Rotationsachse der Antriebswelle 16 stehen. Bei Rotation führen die Rührblätter 19 eine Taumelbewegung aus, welche eine zusätzliche Druckpulsation hervorrufen. Durch die parallele Anordnung der einzelnen Rührglieder 19 wird auf ein Trennelement 12 einerseits ein Druck und andererseits ein Sog ausgeübt. Aufgrund des Permeatraumes beeinflussen sich diese Druckkräfte und verstärken sich gegenseitig, so daß eine erhöhte Reinigungswirkung erzielt wird.

In der schematischen Querschnittsansicht von Figur 14 einer weiteren erfindungsgemäßen Ausführungsform 10b ist das Prinzip einer Gegenstromwaschung verdeutlicht. Während die Suspension von einem Zulauf 17 zu einem Ablauf 22 geleitet wird, erfolgt die Zuführung der Waschflüssigkeit an einem Zulauf 35 im Bereich des Ablaufs 22. Die Waschflüssigkeit wird dabei über die angrenzenden Trennelemente wieder aufgenommen und über eine spezielle Waschflüssigkeitsleitung zwischen zwei Trennelemente in einen Bereich geleitet, der vom Ablauf 22 weiter als der Einlauf 35 axial beabstandet ist. Durch eine entsprechende Ausbildung der Vorrichtung 10b kann die Gegenstromwaschung entsprechend weitergeführt werden, bis die Waschflüssigkeit mit den aufgenommenen Verunreinigungen über einen separaten Ausgang 36 an dem Trennelement in der Nähe des Einlaufs 17 abgeführt wird.

In Figur 15 ist eine Ausführungsform einer erfindungsgemäßen Vorrichtung 10c teilweise dargestellt, bei der ein Permeat bei einer vom Radius weitgehend unabhängigen Druckdifferenz abgeführt werden kann. Hierfür ist innerhalb des Permeatraumes 15 eines Trennelementes 12 ein Abzug 37 vorgesehen, in welchen das Permeat ausschließlich an einem Bereich einströmen und somit abfließen kann, welcher in radialer Richtung nahe an der Antriebswelle 16 liegt.

Bei der in Figur 16 dargestellten Ausführungsform einer Vorrichtung 10d ist die Verwendung einer Kühleinrichtung 38 dargestellt. Die plattenförmige Kühleinrichtung 38 ist entsprechend der Form eines Trennelementes ausgebildet und statt eines Trennelementes in einem Modul 11 der Vorrichtung 10c vorgesehen. Durch Einleiten einer Kühlflüssigkeit in die Kühleinrichtung 38 kann eine gewünschte Temperatureinstellung innerhalb des Suspensionsraums erfolgen.

**Patentansprüche**

**1.** Verfahren zum Trennen einer Suspension in ein Retentat und ein Permeat, bei dem:

- die Suspension in einen Suspensionsraum (14) mit mehreren kammerartigen Modulen (11) eingeleitet wird, in welchen jeweils mindestens ein permeables Trennelement (12) mit einer Trennfläche (13) vorgesehen ist,
- in jedem Modul (11) zumindest ein Rührglied (18) in dem Suspensionsraum (14) in einem geringen Abstand über die Trennfläche (13) relativ zu dieser bewegt wird, so daß in einem Spalt zwischen dem Rührglied (18) und der Trennfläche (13) eine Strömung quer zur Trennfläche (13) erzeugt wird,
- ein Differenzdruck zwischen dem Suspensionsraum (14) und einem Permeatraum (15) eingestellt wird, der sich an einer vom Suspensionsraum abgewandten Seite des Trennelements (12) befindet,
- das Permeat, welches aufgrund des anliegenden Differenzdrucks das Trennelement (12) durchdringt, über eine Permeatleitung (28) abgeleitet wird,
- während das eingedickte Retentat aus dem Suspensionsraum (14) über einen Ablauf (22) abgeleitet wird,
- zum Reinigen der Trennfläche (13) in bestimmten Zeitabständen der Differenzdruck für eine definierte Zeitspanne aufgehoben wird und in der Zeitspanne, während der der Differenzdruck aufgehoben ist, die Rührglieder (18) weiter über die Trennfläche (13) bewegt werden,

**dadurch gekennzeichnet,**

- **daß** zum Reinigen der Trennflächen (13) der Differenzdruck an einzelnen Trennelementen (12) separat gesteuert und individuell eingestellt wird, wobei der Differenzdruck an bestimmten Trennelementen (12) auf null gesetzt wird, während an anderen Trennelementen (12) der Differenzdruck weiter anliegt.

**2.** Verfahren nach Anspruch 1,
**dadurch gekennzeichnet,**
**daß** das Aufheben des Differenzdrucks durch eine Steuerung, insbesondere Unterbrechung einer Zuführung an Suspension, einer Abführung an Retentat und/oder einer Abführung des Permeats bewirkt wird.

3. Verfahren nach Anspruch 1 oder 2,
**dadurch gekennzeichnet,**
**daß** die Suspension vom Zulauf (17) zum Ablauf (22) durch mehrere kammerartige Module (11) geleitet wird, in welchen jeweils mindestens ein Trennelement (12) mit einer Permeatleitung (28) angeordnet ist und
**daß** in Richtung zum Ablauf (22) eine Aufkonzentrierung der Suspension erfolgt.

4. Verfahren nach Anspruch 3,
**dadurch gekennzeichnet,**
**daß** die Abführung des Permeats aus dem Modul (11) mittels eines Ventiles (30) an der Permeatleitung (28) separat gesteuert wird.

5. Verfahren nach einem der Ansprüche 1 bis 4,
**dadurch gekennzeichnet,**
**daß** eine Siebfiltration durchgeführt wird, bei der das Trennelement (12) als ein Siebmedium ausgebildet ist, und
**daß** das Permeat mit einem definierten Feingutanteil gewonnen wird.

6. Verfahren nach einem der Ansprüche 1 bis 5,
**dadurch gekennzeichnet,**
**daß** in der Zeitspanne, während der der Differenzdruck aufgehoben ist, die Bewegungsgeschwindigkeit des Rührgliedes (18) erhöht wird.

7. Verfahren nach einem der Ansprüche 1 bis 6,
**dadurch gekennzeichnet,**
**daß** in der Zeitspanne, während der der Differenzdruck aufgehoben ist, eine Rückspülung von der Seite des Permeatraumes (15) in den Suspensionsraum (14) durchgeführt wird.

8. Verfahren nach einem der Ansprüche 1 bis 7,
**dadurch gekennzeichnet,**
**daß** die Suspension in dem Suspensionsraum (14) gekühlt oder erwärmt wird.

9. Verfahren nach einem der Ansprüche 1 bis 8,
**dadurch gekennzeichnet,**
**daß** die Zeitspanne, während der der Differenzdruck aufgehoben ist, auf einen Wert zwischen 5 Sekunden und 120 Sekunden eingestellt wird.

10. Verfahren nach einem der Ansprüche 1 bis 9,
**dadurch gekennzeichnet,**
**daß** die Zeitabstände zwischen zwei aufeinanderfolgenden Aufhebungen des Differenzdrucks zwischen 20 Sekunden und 1 Stunde eingestellt wird.

11. Verfahren nach einem der Ansprüche 1 bis 10,
**dadurch gekennzeichnet,**
**daß** eine Suspension mit formveränderlichen, weichen Partikeln verwendet wird, insbesondere eine Suspension mit Polymerteilchen, beispielsweise Polystyrol, in einem organischen Lösungsmittel, beispielsweise Polyol.

12. Verfahren nach einem der Ansprüche 1 bis 11,
**dadurch gekennzeichnet,**
**daß** zum Abführen des Retentats ein am Ablauf (22) angeordnetes Abschlämmorgan (27) in vorgegebenen Zeitzyklen kurzfristig geöffnet wird.

13. Verfahren nach einem der Ansprüche 1 bis 12,
**dadurch gekennzeichnet,**
**daß** in den Suspensionsraum (14) zusätzlich eine Waschflüssigkeit eingeleitet wird, wobei insbesondere eine Waschung in einer Richtung von dem Ablauf (22) zu dem Zulauf (17) durchgeführt wird.

14. Vorrichtung zum Trennen einer Suspension in ein Retentat und ein Permeat mit:

- einem Suspensionsraum (14), welcher einen Zulauf (17) und einen Ablauf (22) aufweist, wobei der Suspensionsraum (14) mehrere Module (11) umfasst,
- mindestens einem permeablen Trennelement (12) in jedem Modul (11) mit einer Trennfläche (13), welche an einen Suspensionsraum (14) angrenzt,
- mindestens einem Rührglied (18),

welches in dem Suspensionsraum (14) angeordnet ist und in einem geringen Abstand über die Trennflächen (13) bewegbar gelagert ist,

- einem Antrieb zum Bewegen des Rührgliedes (18) relativ über die Trennfläche (13), so daß in einem Spalt zwischen dem Rührglied (18) und der Trennfläche (13) eine Strömung quer zur Trennfläche (13) erzeugbar ist,
- einem Permeatraum (15), welcher durch das Trennelement (12) von dem Suspensionsraum (14) abgegrenzt ist, und
- einer Einrichtung zur Erzeugung eines Differenzdrucks zwischen dem Suspensionsraum (14) und dem Permeatraum (15),

**dadurch gekennzeichnet,**

- **daß** separat steuerbare Ventile (30) für Leitungen für die Abführung des Permeats aus dem Permeatraum (15) angeordnet sind, und
- **daß** eine Steuereinrichtung zum individuellen Öffnen und Schließen der Ventile (30) zu bestimmten Zeiten vorgesehen ist, wobei die Ventile (30) durch die Steuereinrichtung zum Aufheben des Differenzdrucks derart steuerbar sind, daß der Differenzdruck an bestimmten Trennelementen (12) auf null gesetzt ist, während an anderen Trennelementen (12) der Differenzdruck weiter anliegt.

15. Vorrichtung nach Anspruch 14,
**dadurch gekennzeichnet,**
**daß** das permeable Trennelement (12) als ein Siebelement mit Sieböffnungen ausgebildet ist, welche im wesentlichen die gleiche Größe aufweisen.

16. Vorrichtung nach Anspruch 14 oder 15,
**dadurch gekennzeichnet,**
**daß** der Antrieb eine Antriebswelle (16) aufweist, welche von der Seite des Zulaufs (17) in den Suspensionsraum (14) hineinragt und mittig zu den scheibenförmigen Trennelementen (12) in den Modulen (11) angeordnet ist und
**daß** die Rührglieder (18) an der Antriebwelle (16) angebracht sind.

17. Vorrichtung nach Anspruch 16,
**dadurch gekennzeichnet,**
**daß** das um eine Achse angetriebene Rührglied (18) als ein Rotor mit im wesentlichen radial verlaufenden Rührblättern (19) ausgebildet ist,
**daß** die Rührblätter (19) sich radial nach außen verjüngen, so daß ein Abstand zwischen dem jeweiligen Rührblatt (19) und der Trennfläche (13) sich radial nach außen hin erweitert.

18. Vorrichtung nach Anspruch 16 oder 17,
**dadurch gekennzeichnet,**
**daß** die Rührblätter (19) eines als Rotor ausgebildeten Rührgliedes (18) in einer Rotorebene angeordnet sind, daß die Rotoren axial versetzt zueinander in einem schrägen Winkel zur Achse der Antriebswelle (16) angebracht sind und
**daß** zwischen den einzelnen Rotoren jeweils ein Trennelement (12) mit zwei gegenüberliegenden, im wesentlichen radial verlaufenden Trennflächen (13) vorgesehen sind.

19. Vorrichtung nach einem der Ansprüche 14 bis 18,
**dadurch gekennzeichnet,**
**daß** ein Strömungsprofil der Rührblätter (19) an einem radial inneren Bereich und einem radial äußeren Bereich unterschiedlich ausgebildet sind und
**daß** die Rührblätter (19) an dem radial inneren Bereich gegenüber dem radial äußeren Bereich ein höherer Differenzdruck erzeugbar ist.

20. Vorrichtung nach einem der Ansprüche 14 bis 19,
**dadurch gekennzeichnet,**
**daß** die Rührblätter (19) eines als Rotor ausgebildeten Rührgliedes (18) jeweils aus mehreren, relativ schmalen Stegen (34) aufgebaut sind.

21. Vorrichtung nach einem der Ansprüche 14 bis 19,
**dadurch gekennzeichnet,**
**daß** die Rührblätter (19) eines als Rotor ausgebildeten Rührgliedes (18) jeweils im wesentlichen als eine rechteckige Platte ausgebildet sind, welche in einem rechten Winkel zu einer angrenzenden Trennfläche (13) angeordnet ist.

22. Vorrichtung nach einem der Ansprüche 14 bis 21,
**dadurch gekennzeichnet,**
**daß** innerhalb des Permeatraumes (15) eine Rückspüleinrichtung vorgesehen ist, durch welche eine Spülflüssigkeit von dem Permeatraum (15) durch das Trennelement (12) in den Suspensionsraum (14) leitbar ist.

23. Vorrichtung nach einem der Ansprüche 14 bis 22,
**dadurch gekennzeichnet,**
**daß** innerhalb des Suspensionsraumes (14) mindestens eine Kühleinrichtung (38) zur Temperaturführung der Suspension angeordnet ist.

24. Vorrichtung nach einem der Ansprüche 14 bis 23,
**dadurch gekennzeichnet,**
**daß** eine Wascheinrichtung mit mindestens einer Waschflüssigkeitsleitung vorgesehen ist, welche in den Suspensionsraum (14) mündet.

**Claims**

1. Method for separating a suspension into a retentate and a permeate, in which:

   - the suspension is introduced into a suspension area (14) with several chamber-like modules (11) in which in each case there is at least one permeable separating element (12) with a separating surface (13),
   - in each module (11) at least one stirring member (18) in the suspension area (14) is moved at a limited distance over and relative to the separating surface (13), so that a flow at right angles to the separating surface (13) is produced in a gap between the stirring member (18) and the separating surface (13),
   - a differential pressure is set between the suspension area (14) and a permeate area (15), which is located on the side of the separating element (12) remote from the suspension area,
   - the permeate, which as a result of the differential pressure applied permeates the separating element (12), is drained off by means of a permeate line (28),
   - whilst the thickened retentate is drained off via an outlet (22) from the suspension area (14);
   - the differential pressure is cancelled out for a clearly defined time period for cleaning the separating surface (13) at given time intervals, and
- in the time period during which the differential pressure is cancelled out, the stirring members (18) continue to be moved over the separating surface (13),

**characterized in that**

- for cleaning the separating surfaces (13) the differential pressure is separately controlled and individually set at individual separating elements (12) and at certain separating elements (12) the differential pressure is set to zero, whereas at other separating elements (12) the differential pressure continues to be applied.

2. Method according to claim 1,
**characterized in that**
the cancelling out of the differential pressure is brought about by a control, particularly the interruption of a supply of suspension, a removal of retentate and/or a removal of permeate.

3. Method according to claim 1 or 2,
**characterized in that**
the suspension is passed from inlet (17) to outlet (22) through several chamber-like modules (11) in which is in each case provided at least one separating element (12) with a permeate line (28) and
that a concentration of the suspension takes place in the direction of the outlet (22).

4. Method according to claim 3,
**characterized in that**
the removal of permeate from the module (11) is separately controlled by a valve (30) on the permeate line (28).

5. Method according to one of the claims 1 to 4,
**characterized in that**
screen filtration is carried out, in which the separating element (12) is constructed as a screening medium and
that the permeate is obtained with a clearly defined fines proportion.

6. Method according to one of the claims 1 to 5,
**characterized in that**
the speed of movement of the stirring member (18) is increased in the time period during which the differential pressure is cancelled out.

7. Method according to one of the claims 1 to 6,
**characterized in that**
there is a backwashing from the side of the permeate area (15) into the suspension area (14) in the time period during which the differential pressure is cancelled out.

8. Method according to one of the claims 1 to 7,
**characterized in that**
the suspension in the suspension area (14) is cooled or heated.

9. Method according to one of the claims 1 to 8,
**characterized in that**
the time period during which the differential pressure is cancelled out is set to a value between 5 seconds and 120 seconds.

10. Method according to one of the claims 1 to 9,
**characterized in that**
the time intervals between two successive cancelling outs of the differential pressure are set at between 20 seconds and 1 hour.

11. Method according to one of the claims 1 to 10,
**characterized in that**
use is made of a suspension with shape-variable, soft particles, particularly a suspension with polymer particles, e.g. polystyrene, in an organic solvent, e.g. polyol.

12. Method according to one of the claims 1 to 11,
**characterized in that**
an elutriating member (27) located at the outlet (22) is briefly opened in predetermined time cycles for removing the retentate.

13. Method according to one of the claims 1 to 12,
**characterized in that**
a washing liquid is additionally introduced into the suspension area (14) and in particular washing takes place in a direction from the outlet (22) to the inlet (17).

14. Apparatus for separating a suspension into a retentate and a permeate, having:

- a suspension area (14) provided with an inlet (17) and an outlet (22), the suspension area (14) comprising several modules (11),
- at least one permeable separating element (12) in each module (11) with a separating surface (13) adjacent to a suspension area (14),
- at least one stirring member (18) located in the suspension area (14) and movably mounted at a limited distance over the separating surfaces (13),
- a drive for moving the stirring member (18) in relative manner over the separating surface (13), so that a flow at right angles to the separating surface (13) can be produced in a gap between the stirring member (18) and the separating surface (13),
- a permeate area (15) demarcated from the suspension area (14) by the separating element (12) and
- a device for producing a differential pressure between the suspension area (14) and the permeate area (15),

**characterized in that**

- separately controllable valves (30) are provided for lines for removing permeate from the permeate area (15) and
- a control device is provided for the individual opening and closing of the valves (30) at specific times, the valves (30) being controllable by the control device for cancelling out the differential pressure in such a way that the differential pressure is set to zero at specific separating elements (12), whilst the differential pressure continues to be applied to other separating elements (12).

15. Apparatus according to claim 14,
**characterized in that**
the permeable separating element (12) is constructed as a screening element with screening openings essentially having the same size.

16. Apparatus according to claim 14 or 15,
**characterized in that**
the drive has a drive shaft (16) projecting from the side of the inlet (17) into the suspension area (14) and being positioned centrally with respect to the disk-shaped separating elements (12) in the modules (11) and
that the stirring members (18) are fitted to the drive shaft (16).

17. Apparatus according to claim 16,
**characterized in that**
the stirring member (18) driven about an axis is constructed as a rotor with substantially radially directed stirring blades (19) and
that the stirring blades (19) taper radially outwards, so that a spacing between the given stirring blade (19) and the separating surface (13) is increased radially outwards.

18. Apparatus according to claim 16 or 17,
**characterized in that**
the stirring blades (19) of a stirring member (18) constructed as a rotor are positioned in a rotor plane,
that the rotors are fitted in an axially offset manner to one another in an inclined angle to the axis of the drive shaft (16) and
that between the individual rotors is in each case provided a separating element (12) with two facing, substantially radially directed separating surfaces (13).

19. Apparatus according to one of the claims 14 to 18,
**characterized in that**
different flow profiles for the stirring blades (19) are formed in a radially inner area and a radially outer area and
that the stirring blades (19) can produce a higher differential pressure in the radial inner area compared with the radially outer area.

20. Apparatus according to one of the claims 14 to 19,
**characterized in that**
the stirring blades (19) of a stirring member (18) constructed as a rotor are in each case built up from several, relatively narrow webs (34).

21. Apparatus according to one of the claims 14 to 19,
**characterized in that**
the stirring blades (19) of a stirring member (18) constructed as a rotor are essentially constructed as a rectangular plate, which is positioned at right angles to an adjacent separating surface (13).

22. Apparatus according to one of the claims 14 to 21,
**characterized in that**
within the permeate area (15) is provided a backwashing device through which a washing liquid can be passed from the permeate area (15) through separating element (12) into the suspension area (14).

23. Apparatus according to one of the claims 14 to 22,
**characterized in that**
within the suspension area (14) is provided at least one cooling device (38) for controlling the temperature of the suspension.

24. Apparatus according to one of the claims 14 to 23,
**characterized in that**
a washing device with at least one washing liquid line is provided, said line issuing into the suspension area (14).

**Revendications**

1. Procédé pour séparer une suspension en un rétentat et un perméat, dans lequel :

- la suspension est introduite dans un espace (14) de suspension comportant plusieurs modules (11) de type chambre, dans lesquels à chaque fois au moins un élément de séparation perméable (12) est prévu, avec une surface de séparation (13),
- dans chaque module (11), au moins un organe d'agitation (18) est déplacé dans l'espace (14) de suspension à une faible distance au-dessus de la surface de séparation (13) et par rapport à celle-ci, de telle sorte qu'un écoulement transversal à la surface de séparation (13) est produit dans une fente entre l'organe d'agitation (18) et la surface de séparation (13),

- une différence de pression est instaurée entre l'espace (14) de suspension et un espace (15) à perméat, qui se trouve sur un côté de l'élément de séparation (12) opposé à l'espace de suspension,

- le perméat, qui traverse l'élément de séparation (12) en raison de la différence de pression existante, est évacué par une conduite (28) pour le perméat,

- tandis que le rétentat épaissi est évacué de l'espace (14) de suspension par une évacuation (22),

- pour nettoyer la surface de séparation (13) à des intervalles de temps déterminés, la différence de pression est supprimée pendant une durée définie, et

- pendant l'intervalle de temps pendant lequel la différence de pression est supprimée, les organes (18) d'agitation continuent à bouger au-dessus de la surface de séparation (13),

**caractérisé en ce que**

- pour nettoyer les surfaces de séparation (13), la différence de pression est pilotée séparément et instaurée individuellement sur les différents éléments de séparation (12), la différence de pression étant mise à zéro sur certains éléments de séparation (12), tandis que la différence de pression demeure sur d'autres éléments de séparation (12).

2. Procédé selon la revendication 1, **caractérisé en ce que** la suppression de la différence de pression est provoquée par une commande, en particulier l'interruption d'une alimentation en suspension, d'une évacuation du rétentat et/ou d'une évacuation du perméat.

3. Procédé selon la revendication 1 ou 2, **caractérisé en ce que** la suspension est envoyée de l'alimentation (17) à l'évacuation (22) à travers plusieurs modules (11) de type chambre, dans' lesquels est placé à chaque fois au moins un élément de séparation (12) avec une conduite (28) pour le perméat, et **en ce qu'**une concentration de la suspension a lieu en direction de l'évacuation (22).

4. Procédé selon la revendication 3, **caractérisé en ce que** l'évacuation du perméat depuis le module (11) est commandée séparément au moyen d'une vanne (30) placée sur la conduite (28) pour le perméat.

5. Procédé selon l'une quelconque des revendications 1 à 4, **caractérisé en ce qu'**une filtration par tamis est effectuée, lors de laquelle l'élément de séparation (12) est conformé en milieu de tamisage, et en ce que le perméat est extrait avec une proportion de matières fines définie.

6. Procédé selon l'une quelconque des revendications 1 à 5, **caractérisé en ce que**, dans l'intervalle de temps pendant lequel la différence de pression est supprimée, la vitesse de mouvement de l'organe d'agitation (18) est augmentée.

7. Procédé selon l'une quelconque des revendications 1 à 6, **caractérisé en ce que**, dans l'intervalle de temps pendant lequel la différence de pression est supprimée, on procède à un rinçage du côté de l'espace (15) à perméat dans l'espace de suspension (14) .

8. Procédé selon l'une quelconque des revendications 1 à 7, **caractérisé en ce que** la suspension est refroidie ou chauffée dans l'espace de suspension (14).

9. Procédé selon l'une quelconque des revendications 1 à 8, **caractérisé en ce que** l'intervalle de temps pendant lequel la différence de pression est supprimée est fixé à une valeur comprise entre 5 secondes et 120 secondes.

10. Procédé selon l'une quelconque des revendications 1 à 9, **caractérisé en ce que** les intervalles de temps entre deux suppressions successives de la différence de pression sont fixés entre 20 secondes et 1 heure.

11. Procédé selon l'une quelconque des revendications 1 à 10, **caractérisé en ce qu'**on utilise une suspension comportant des particules molles de forme variable, en particulier une suspension contenant des particules de polymère, par exemple de polystyrène, dans un solvant organique, par exemple du polyol.

12. Procédé selon l'une quelconque des revendications 1 à 11, **caractérisé en ce que** pour évacuer le rétentat, un organe de purge (27) placé sur l'évacuation (22) est ouvert brièvement selon des cycles temporels prédéfinis.

13. Procédé selon l'une quelconque des revendications 1 à 12, **caractérisé en ce qu'**un liquide de lavage est introduit en plus dans l'espace de suspension (14), en particulier un lavage étant réalisé dans une direction allant de l'évacuation (22) à l'alimentation (17) .

14. Dispositif pour séparer une suspension en un rétentat et un perméat, avec :

- un espace (14) de suspension qui présente une alimentation (17) et une évacuation (22), l'espace (14) de suspension comprenant plusieurs modules (11),
- au moins un élément de séparation perméable (12) dans chaque module (11) avec une surface de séparation (13) qui est voisine d'un espace (14) de suspension,
- au moins un organe d'agitation (18) qui est placé dans l'espace (14) de suspension et est monté mobile à une faible distance au-dessus des surfaces de séparation (13),
- un entraînement pour déplacer l'organe d'agitation (18) de manière relative au-dessus de la surface de séparation (13), de telle sorte qu'un écoulement transversal à la surface de séparation (13) puisse être produit dans une fente entre l'organe d'agitation (18) et la surface de séparation (13),
- un espace (15) à perméat qui est séparé de l'espace de suspension (14) par l'élément de séparation (12), et
- un dispositif pour produire une différence de pression entre l'espace de suspension (14) et l'espace (15) à perméat,

**caractérisé**

- **en ce que** des vannes (30) pouvant être commandées séparément sont prévues pour des conduites destinées à évacuer le perméat depuis l'espace (15) à perméat, et
- **en ce qu'**un dispositif de commande est prévu pour ouvrir et fermer individuellement les vannes (30) à des instants déterminés, les vannes (30) pouvant être commandées par le dispositif de commande pour supprimer la différence de pression, de telle manière que la différence de pression est mise à zéro sur certains éléments de séparation (12), tandis que la différence de pression demeure sur d'autres éléments de séparation (12).

**15.** Dispositif selon la revendication 14, **caractérisé en ce que** l'élément de séparation perméable (12) est conformé en élément de tamisage avec des ouvertures de tamis qui présentent pour l'essentiel la même taille.

**16.** Dispositif selon la revendication 14 ou 15, **caractérisé**
**en ce que** l'entraînement comprend un arbre d'entraînement (16) qui forme saillie dans l'espace (14) de suspension depuis le côté de l'alimentation (17) et est placé dans les modules au centre par rapport aux éléments de séparation (12) en forme de disque, et
**en ce que** les organes d'agitation (18) sont placés sur l'arbre d'entraînement (16).

**17.** Dispositif selon la revendication 16, **caractérisé en ce que** l'organe d'agitation (18) entraîné autour d'un axe est conformé en rotor avec des pales agitatrices (19) d'extension essentiellement radiale,
**en ce que** les pales agitatrices (19) sont effilées radialement en direction de l'extérieur, de telle sorte qu'une distance entre la pale agitatrice (19) respective et la surface de séparation (13) s'élargit radialement en direction de l'extérieur.

**18.** Dispositif selon la revendication 16 ou 17, **caractérisé**
**en ce que** les pales agitatrices (19) d'un organe d'agitation (18) conformé en rotor sont disposées dans un plan de rotor,
**en ce que** les rotors sont disposés de façon décalée les uns par rapport aux autres selon un angle aigu par rapport à l'axe de l'arbre d'entraînement (16), et
**en ce qu'**entre les divers rotors est prévu à chaque fois un élément de séparation (12) comportant deux surfaces de séparation (13) opposées s'étendant pour l'essentiel radialement.

**19.** Dispositif selon l'une quelconque des revendications 14 à 18, **caractérisé**
**en ce qu'**un profil d'écoulement des pales agitatrices (19) est réalisé différemment sur une partie radialement intérieure et sur une partie radialement extérieure et
**en ce qu'**une différence de pression plus grande peut être produite sur la partie radialement intérieure que sur la partie radialement extérieure des pales agitatrices (19).

**20.** Dispositif selon l'une quelconque des revendications 14 à 19, **caractérisé en ce que** les pales agitatrices (19) d'un organe d'agitation (18) conformé en rotor sont constituées chacune de plusieurs barres relativement étroites (34).

**21.** Dispositif selon l'une quelconque des revendications 14 à 19, **caractérisé en ce que** les pales agitatrices (19) d'un organe d'agitation (18) conformé en rotor sont conformées chacune pour l'essentiel en plaque rectangulaire, qui est placée à angle droit par rapport à une surface de séparation (13) voisine.

**22.** Dispositif selon l'une quelconque des revendications 14 à 21, **caractérisé en ce qu'**à l'intérieur de l'espace (15) à perméat est prévu un dispositif de rinçage par lequel un liquide de rinçage peut être envoyé de l'espace (15) à perméat à l'espace de suspension (14) à travers l'élément de séparation (12).

**23.** Dispositif selon l'une quelconque des revendications 14 à 22, **caractérisé en ce qu'**à l'intérieur de l'espace de suspension (14) est placé au moins un dispositif de refroidissement (38) pour commander la température de la suspension.

24. Dispositif selon l'une quelconque des revendications 14 à 23, *caractérisé en ce qu*'il est prévu un dispositif de lavage avec au moins une conduite de liquide de lavage qui débouche dans l'espace de suspension (14).

Fig. 2

V = 10 m³
ρ = 0-2 bar
T = 20-60°C

A 0,13 m²

V = 1-2 m³

V = 65 l

V = 10 m³
ρ = 0-2 bar

EP 1 057 512 B1

Fig. 3

13a

s

r

G

Fig. 4

A

B

A

B

13b

A-A

B-B

Fig. 5

13c

Fig. 6

Fig. 7

Fig. 8

Fig. 9

Fig. 10

Fig. 11

Fig. 12

Fig. 13

10a

12

16

19

Fig. 14

10b

35

17

22

36

Fig. 15

10 c

37

12

15

16

Fig. 16

10 d

Q̇

G

Ṁ

38